# EUROPEAN PATENT APPLICATION

(11) **EP 4 484 468 A1**
(43) Date of publication of application: **01.01.2025**
(21) Application number: 23756131.1
(22) Date of filing: 27.01.2023
(51) Int. Cl.: C08G 77/50, C08L 83/14, C09D 183/04, C09J 183/04, C09K 3/10

(54) **ORGANOPOLYSILOXANE AND ROOM TEMPERATURE-CURABLE ORGANOPOLYSILOXANE COMPOSITION CONTAINING SAME**

(30) Priority: 21.02.2022 JP 2022025038
(71) Applicant: SHIN-ETSU CHEMICAL CO., LTD., Tokyo 1000005 (JP)
(72) Inventor: ASO, Fumihiro, Annaka-shi, Gunma 379-0224 (JP); FUJIWARA, Akitsugu, Annaka-shi, Gunma 379-0224 (JP)
(74) Representative: Mewburn Ellis LLP
(86) International application number: PCT/JP2023/002547
(87) International publication number: WO 2023/157603

(57) **Abstract**

An organopolysiloxane according to the present invention, having a structural unit ratio represented by formula (1), provides a room temperature-curable composition that has excellent curability and stability even when a solvent is not used, and that is capable of producing a cured product having high hardness and high transparency. 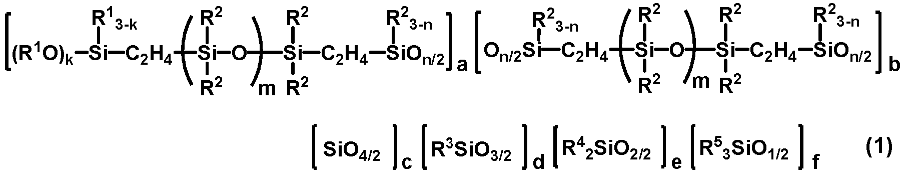 (R¹ and R² each represent an alkyl group having 1-12 carbon atoms or an aryl group having 6-10 carbon atoms; k represents an integer of 1-3; m represents a number of 5-100; n represents 2 or 3; R³, R⁴, and R⁵ each represent an alkyl group having 1-12 carbon atoms, an alkenyl group having 2-8 carbon atoms, an aryl group having 6-10 carbon atoms, an aralkyl group having 7-10 carbon atoms, an alkoxy group having 1-4 carbon atoms, or a hydroxy group; and a, b, c, d, e, and f each represent a number satisfying a > 0, b > 0, c ≥ 0, d > 0, e > 0, and f ≥ 0, as well as a+b+c+d+e+f = 1.)

## Description

### TECHNICAL FIELD

The present invention relates to an organopolysiloxane and a room temperature-curable organopolysiloxane composition containing the same.

### BACKGROUND ART

Room temperature-curable organopolysiloxane compositions that can react with water in the air and cure at room temperature do not require heat, special equipment, or the like during curing, and therefore, are widely used as, for example, sealants for electric or electronic devices, adhesives, or coatings. Of these, in applications to sealants for electric or electronic devices, dealcoholization or deacetone-type room temperature-curable organopolysiloxane compositions are often used. Such solvent removal-type room temperature-curable organopolysiloxane compositions are less corrosive to metals and thus are advantageous in that they are less likely to corrode electrodes and wiring and also have excellent adhesive properties.

In particular, as a conformal coating agent used for protecting, from the usage environment, electric/electronic parts and surfaces of circuit boards on which such parts are mounted, a coating agent composed of a low-viscosity room temperature-curable polyorganosiloxane composition is used. In such a coating agent, a linear organopolysiloxane is subjected to condensation reaction with a crosslinkable low-molecular weight siloxane to form a cured film.

However, such a cured film formed from a linear organopolysiloxane and a crosslinkable low-molecular weight siloxane has a problem in that the cured film has low hardness and is susceptible to scratches and the like. Various studies have been conducted to solve this problem (Patent Documents 1 and 2); however, the hardness of the film is still insufficient.

Moreover, the above composition also has a problem in that the coating film is whitened as crosslinking of the linear organopolysiloxane proceeds because the crosslinking is caused by mixing a plurality of components (Patent Document 3).

In the field of coating, alkoxysilicone resins/oligomers are often used in the production of a high-hardness coating. However, in general, a solvent for dissolving an organopolysiloxane is essential; therefore, when such an alkoxysilicone resin/oligomer is used as a conformal coating agent, there is a concern about deterioration of a working relationship due to volatilization of the solvent and corrosion of electrodes and wiring.

In addition, in a typical alkoxysilicone resin/oligomer, since a condensation moiety with high reaction activity reacts during the synthesis, such a condensation moiety with high reaction activity does not remain in the organopolysiloxane which is a final product, and there is also a problem in that curing by condensation reaction on a coating film takes time.

Furthermore, such an alkoxysilicone resin/oligomer that forms a high-hardness coating lacks flexibility and bending resistance due to a high crosslinking density thereof, and has a problem in that cracks occur in a coating film over time or, for example, when an external stress is applied after the film formation. To improve flexibility and bending resistance of this high-hardness coating, there has been developed an alkoxysilicone oligomer in which a continuous diorganosiloxane unit (D unit) is introduced by hydrosilylation or a method for incorporating a D unit by, for example, using a diorganodialkoxysilane in combination in the synthesis by hydrolytic condensation (Patent Document 4).

In the alkoxysilicone oligomer in which a continuous D unit is introduced by hydrosilylation, the D unit can be locally introduced compared with a random hydrolytic condensation method, and properties of the diorganopolysiloxane are easily exhibited. On the other hand, a decrease in hydrolyzability of an alkoxysilyl moiety occurs as in the above, and an improvement in curability is desired.

### PRIOR ART DOCUMENTS

### PATENT DOCUMENTS

| | |
|---|---|
| Patent Document 1: | JP 5763284 |
| Patent Document 2: | JP 6964472 |
| Patent Document 3: | JP-A 2021-517188 |
| Patent Document 4: | JP 6642324 |

### SUMMARY OF INVENTION

### TECHNICAL PROBLEM

The invention has been made in view of the circumstances described above, and an object of the invention is to provide an organopolysiloxane which provides a room temperature-curable composition that has excellent curability and stability even when a solvent is not used, and that is capable of producing a cured product having high hardness and high transparency and a room temperature-curable organopolysiloxane composition containing the same.

### SOLUTION TO PROBLEM

As a result of extensive studies to achieve the above object, the inventors of the invention have found that a curable composition containing an organopolysiloxane having a specific polydimethylsiloxane-containing unit can be cured at room temperature, has excellent stability, and provides a cured product having high hardness and high transparency and have completed the invention.

Specifically, the invention provides the following:
1. An organopolysiloxane having a structural unit ratio represented by formula (1) below: 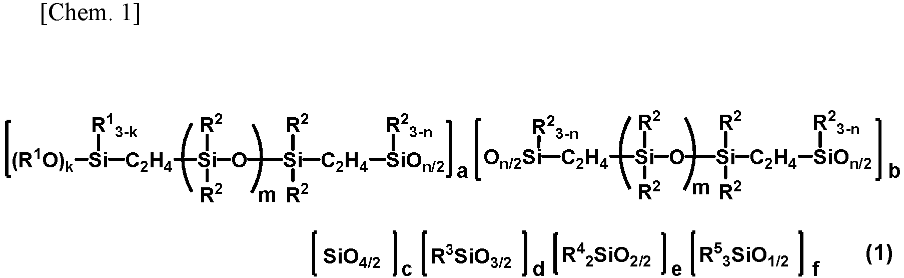 (wherein R¹ and R² each independently represent an unsubstituted or substituted alkyl group having 1 to 12 carbon atoms or an unsubstituted or substituted aryl group having 6 to 10 carbon atoms; k represents an integer of 1 to 3; m represents a number of 5 to 100; n represents 2 or 3; R³, R⁴, and R⁵ each independently represent an unsubstituted or substituted alkyl group having 1 to 12 carbon atoms, an unsubstituted or substituted alkenyl group having 2 to 8 carbon atoms, an unsubstituted or substituted aryl group having 6 to 10 carbon atoms, an unsubstituted or substituted aralkyl group having 7 to 10 carbon atoms, an unsubstituted or substituted alkoxy group having 1 to 4 carbon atoms, or a hydroxy group; and a, b, c, d, e, and f each represent a number satisfying a > 0, b > 0, c ≥ 0, d > 0, e > 0, f ≥ 0, and a+b+c+d+e+f = 1.)
2. The organopolysiloxane of 1, wherein R¹ and R² each independently represent a methyl group or an ethyl group.
3. The organopolysiloxane of 1 or 2, wherein a kinematic viscosity at 25°C is 100 to 2,000 mm²/s.
4. The organopolysiloxane of any one of 1 to 3, wherein a weight-average molecular weight (Mw) determined by gel permeation chromatography versus polystyrene standards is 1,000 to 50,000.
5. A room temperature-curable organopolysiloxane composition comprising:
   (A) the organopolysiloxane of any one of 1 to 4: 100 parts by mass; and
   (B) a catalyst for condensation reaction: 0.1 to 15 parts by mass.
6. The room temperature-curable organopolysiloxane composition of 5, wherein the component (B) includes an organotitanium compound.
7. The room temperature-curable organopolysiloxane composition of 5 or 6, comprising (C) a silane compound represented by general formula (2) below in an amount of 0.5 to 50 parts by mass per 100 parts by mass of the component (A),

   R⁶_{g}Si(OR⁷)_{4-g} (2)

   (wherein each R⁶ independently represents an alkyl group having 1 to 8 carbon atoms, an alkenyl group having 2 to 8 carbon atoms, an aryl group having 6 to 10 carbon atoms, an aralkyl group having 7 to 10 carbon atoms, or an acyl group having 2 to 8 carbon atoms; R⁷ represents an alkyl group having 1 to 8 carbon atoms or an acyl group having 2 to 8 carbon atoms; and g represents an integer of 0 to 3.)
8. The room temperature-curable organopolysiloxane composition of any one of 5 to 7, wherein a solvent content is 1% by mass or less based on a total mass of the composition.
9. An electric or electronic part sealed, fixed, or bonded with a cured product of the room temperature-curable organopolysiloxane composition of any one of 5 to 8.
10. A conformal coating comprising the room temperature-curable organopolysiloxane composition of any one of 5 to 8.

### ADVANTAGEOUS EFFECTS OF INVENTION

An organopolysiloxane of the invention provides a room temperature-curable composition that has a low viscosity and an excellent coating property and has excellent curability and stability even when a solvent is not used.

A cured product obtained from the curable composition containing the organopolysiloxane of the invention has high hardness and excellent transparency and is suitably used for, for example, a coating material (conformal coating) of electric or electronic devices and a potting material.

### DESCRIPTION OF EMBODIMENTS

The invention will be specifically described below.

### [1] Organopolysiloxane

An organopolysiloxane of the invention has a structural unit ratio represented by formula (1) below.

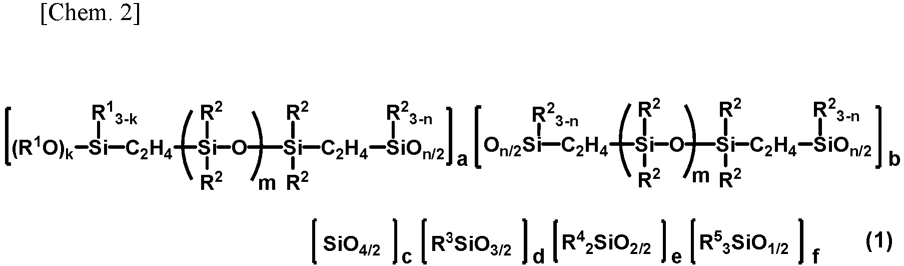

R¹ and R² each independently represent an unsubstituted or substituted alkyl group having 1 to 12 carbon atoms or an unsubstituted or substituted aryl group having 6 to 10 carbon atoms.

Specific examples of the alkyl group having 1 to 12 carbon atoms include methyl, ethyl, n-propyl, i-propyl, n-butyl, i-butyl, t-butyl, n-pentyl, n-hexyl, n-heptyl, and n-octyl groups.

Specific examples of the aryl group having 6 to 12 carbon atoms include phenyl and naphthyl groups.

In C-H bonds of these substituents, some or all of the hydrogen atoms may be substituted by halogen atoms such as chlorine, fluorine, or bromine atoms. An example thereof is a 1,1,1-trifluoropropyl group (trifluoromethyl ethyl group) in which the 1-position of a propyl group is substituted by fluorine atoms.

Of these, R¹ and R² are each preferably a methyl, ethyl, n-propyl, i-propyl, n-butyl, i-butyl, phenyl, benzyl, or vinyl group, more preferably a methyl, ethyl, or phenyl group.

R³, R⁴, and R⁵ each independently represent an unsubstituted or substituted alkyl group having 1 to 12 carbon atoms, an unsubstituted or substituted alkenyl group having 2 to 8 carbon atoms, an unsubstituted or substituted aryl group having 6 to 10 carbon atoms, an unsubstituted or substituted aralkyl group having 7 to 10 carbon atoms, an unsubstituted or substituted alkoxy group having 1 to 4 carbon atoms, or a hydroxy group.

Specific examples of the alkyl group having 1 to 12 carbon atoms include methyl, ethyl, n-propyl, i-propyl, n-butyl, i-butyl, t-butyl, n-pentyl, n-hexyl, n-heptyl, and n-octyl groups.

Specific examples of the alkenyl group having 2 to 12 carbon atoms include vinyl, allyl, 3-butenyl, 5-hexenyl, 7-octenyl, 9-decenyl, and 11-dodecenyl groups.

Specific examples of the aryl group having 6 to 12 carbon atoms include phenyl and naphthyl groups.

Specific examples of the aralkyl group having 7 to 12 carbon atoms include benzyl and phenylethyl groups.

Specific examples of the alkoxy group having 1 to 4 carbon atoms include methoxy, ethoxy, propoxy, n-butoxy, and i-butoxy groups.

In C-H bonds of these substituents, some or all of the hydrogen atoms may be substituted by halogen atoms such as chlorine, fluorine, or bromine atoms. An example thereof is a 1,1,1-trifluoropropyl group (trifluoromethyl ethyl group) in which the 1-position of a propyl group is substituted by fluorine atoms.

Of these, R³, R⁴, and R⁵ are each preferably a methyl, ethyl, n-propyl, isopropyl, n-butyl, isobutyl, phenyl, benzyl, or vinyl group, more preferably a methyl, ethyl, phenyl, or vinyl group.

k is an integer of 1 to 3, preferably 3.

m is a number of 5 to 100, preferably 5 to 50, more preferably 5 to 30.

n is 2 or 3.

a, b, c, d, e, and f are each a number satisfying a > 0, b > 0, c ≥ 0, d > 0, e > 0, f ≥ 0, and a+b+c+d+e+f = 1.

a is a number satisfying a > 0, but from the viewpoint of hardness of the resulting cured film and curability, a preferably satisfies 0.01 < a ≤ 0.5, more preferably 0.01 ≤ a ≤ 0.2.

b is a number satisfying b > 0, but from the viewpoint of hardness of the resulting cured film, b preferably satisfies 0.01 ≤ b ≤ 0.5, more preferably 0.01 ≤ b ≤ 0.3.

c is a number satisfying c ≥ 0, but from the viewpoint of curability of the composition and hardness of the resulting cured film, c preferably satisfies 0 ≤ c ≤ 0.4, more preferably 0 ≤ c ≤ 0.3, and is still more preferably 0.

d is a number satisfying d > 0, but from the viewpoint of curability of the composition and hardness of the resulting cured film, d preferably satisfies 0 < d ≤ 0.8, more preferably 0.1 ≤ d ≤ 0.6.

e is a number satisfying e > 0, but from the viewpoint of curability of the composition and hardness of the resulting cured film, e preferably satisfies 0.1 ≤ e ≤ 0.8, more preferably 0.1 ≤ e ≤ 0.6.

f is a number satisfying f ≥ 0, but from the viewpoint of curability of the composition and hardness of the resulting cured film, f preferably satisfies 0 ≤ f ≤ 0.5, more preferably 0.01 ≤ f ≤ 0.2.

a+b is a number preferably satisfying 0.02 ≤ (a+b) ≤ 0.4, more preferably 0.02 ≤ (a+b) ≤ 0.1.

The organopolysiloxane having a structural unit ratio represented by formula (1) above can be produced by a method including hydrolytic condensation and hydrosilylation.

The organopolysiloxane can be obtained by, for example, subjecting an oligomer (c1) obtained by hydrolytic condensation of a monomer including a silane compound having an alkenyl group and a hydrolyzable group such as an alkoxysilyl group to hydrosilylation reaction with a linear organohydrogenpolysiloxane (a1) having a Si-H group at one end and an alkoxysilyl group at the other end and a linear organohydrogenpolysiloxane (b1) having SiH groups at both ends. If only the linear organohydrogenpolysiloxane (b1) having Si-H groups at both ends is used, reactivity on a coating film of the resulting organopolysiloxane is insufficient. If only the linear organohydrogenpolysiloxane (a1) having a Si-H group at one end and an alkoxysilyl group at the other end is used, the organopolysiloxane has a low molecular weight, and film-formability deteriorates.

In hydrolytic condensation, an organic solvent may be used. Specific examples of the organic solvent used herein include methanol, ethanol, propanol, acetone, methyl ethyl ketone, methyl isobutyl ketone, tetrahydrofuran, toluene, and xylene.

The molar ratio of (b1) to (a1) above is preferably (b1)/(a1) = 0.2 to 10, more preferably 1 to 4 from the viewpoint of film-formability and reactivity.

From the viewpoint of preventing an unreacted organohydrogenpolysiloxane from remaining, the ratio of the total number of Si-H groups included in the organohydrogenpolysiloxanes (a1) and (b1) to the number of alkenyl groups included in the oligomer (c1) is preferably in a range of [the number of alkenyl groups]/[the number of Si-H groups] = 1.1 to 10, more preferably 1.2 to 5.

The organopolysiloxane of the invention preferably has a kinematic viscosity of 100 to 2,000 mm²/s, more preferably 300 to 500 mm²/s at 25°C. The kinematic viscosity is a value measured at 25°C with a Cannon-Fenske viscometer by the method described in JIS Z 8803:2011 (the same applies hereinafter).

The organopolysiloxane of the invention preferably has a weight-average molecular weight (Mw) of 1,000 to 50,000, more preferably 5,000 to 20,000 as measured by gel permeation chromatography (GPC) versus polystyrene standards.

### [2] Room temperature-curable organopolysiloxane composition

A room temperature-curable organopolysiloxane composition of the invention contains components (A) and (B) below.
(A) An organopolysiloxane having a structural unit ratio represented by formula (1) above: 100 parts by mass
(B) A catalyst for condensation reaction: 0.1 to 15 parts by mass

Note that, in the invention, "room temperature" means a temperature at which neither heating nor cooling is particularly performed and usually means a temperature range of 0°C to 40°C, suitably 5°C to 35°C.

The catalyst for condensation reaction serving as the component (B) is not particularly limited as long as the catalyst is commonly used in organosiloxane-based coating materials. Organometallic compounds are preferred, and examples thereof include alkoxide compounds, chelate compounds, and ester compounds of metals such as Ti, Al, Zr and Sn.

Specific examples of the metal alkoxide compounds include aluminum alkoxides such as aluminum trimethoxide, aluminum triethoxide, aluminum tri-n-propoxide, aluminum triisopropoxide, aluminum tri-n-butoxide, aluminum triisobutoxide, aluminum tri-s-butoxide, and aluminum tri-t-butoxide; titanium alkoxides such as tetramethyl titanate, tetraethyl titanate, tetra-n-propyl titanate, tetraisopropyl titanate, tetra-n-butyl titanate, tetraisobutyl titanate, tetra-t-butyl titanate, tetra-n-hexyl titanate, tetraisooctyl titanate, and tetra-n-lauryl titanate; zirconium alkoxides such as tetraethyl zirconate, tetra-n-propyl zirconate, tetraisopropyl zirconate, tetra-n-butyl zirconate, tetra-s-butyl zirconate, tetra-t-butyl zirconate, tetra-n-pentyl zirconate, tetra-t-pentyl zirconate, tetra-t-hexyl zirconate, tetra-n-heptyl zirconate, tetra-n-octyl zirconate, and tetra-n-stearyl zirconate; and dibutyltin dibutoxide.

Specific examples of the metal chelate compounds include aluminum chelate compounds such as aluminum tris(ethyl acetoacetate), aluminum tris(n-propyl acetoacetate), aluminum tris(isopropyl acetoacetate), aluminum tris(n-butyl acetoacetate), aluminum isopropoxybis(ethyl acetoacetate), tris(acetylacetonato)aluminum, tris(propionylacetonato)aluminum, diisopropoxypropionylacetonatoaluminum, acetylacetonate-bis(propionylacetonato)aluminum, monoethylacetoacetate-bis(acetylacetonato)aluminum, acetylacetonatoaluminum-di-s-butylate, methylacetoacetatoaluminum-di-s-butylate, aluminum di(methyl acetoacetate)-mono-tert-butylate, aluminum diisopropoxyethyl acetoacetate, and aluminum monoacetylacetonato-bis(ethyl acetoacetate); titanium chelate compounds such as diisopropoxy-bis(ethyl acetoacetato)titanate, diisopropoxy-bis(acetylacetonato)titanate, and di-n-butoxy-bis(acetylacetonato)titanate; zirconium chelate compounds such as tetrakis(acetylacetonato)zirconium, zirconium tetrakis(n-propyl acetoacetate), and zirconium tetrakis(ethyl acetoacetate); and tin chelate compounds, typically tin ester compounds such as dibutyltin diacetate, dibutyltin di(2-ethylhexylate), dibenzyltin di(2-ethylhexylate), dibutyltin dilaurate, dibutyltin diisooctylmaleate, and dibutyltin bis(acetylacetonate).

Among these, the catalyst for condensation reaction is preferably one including an organotitanium compound such as a titanium alkoxide compound or a titanium chelate compound, and in view of reaction activity and stability of the composition, the catalyst is more preferably one including a titanium chelate compound, still more preferably one including a titanium chelate compound alone.

The titanium chelate compound used may be a commercially available product. Examples thereof include D-20, D-25, and D-26 (all of which are manufactured by Shin-Etsu Chemical Co., Ltd.) and ORGATIX TC-750 and ORGATIX TC-401 (manufactured by Matsumoto Fine Chemical Co., Ltd.).

The amount of component (B) blended is 0.1 to 15 parts by mass, preferably 0.5 to 5 parts by mass per 100 parts by mass of the component (A). If the amount of component (B) is smaller than the above range, the resulting composition has insufficient reactivity and hardness. On the other hand, if the amount of component (B) is excessively large, the resulting composition has insufficient stability.

The component (B) may be used alone or as a mixture of two or more compounds.

The room temperature-curable organopolysiloxane composition of the invention may contain, in addition to the component (A) and the component (B), a silane compound represented by formula (2) below as a component (C).

R⁶_{g}Si(OR⁷)_{4-g} (2)

In the formula, each R⁶ independently represents an alkyl group having 1 to 8 carbon atoms, an alkenyl group having 2 to 8 carbon atoms, an aryl group having 6 to 10 carbon atoms, an aralkyl group having 7 to 10 carbon atoms, or an acyl group having 2 to 8 carbon atoms.

Specific examples of the alkyl group having 1 to 8 carbon atoms include methyl, ethyl, n-propyl, i-propyl, n-butyl, i-butyl, t-butyl, n-pentyl, n-hexyl, n-heptyl, and n-octyl groups.

Specific examples of the alkenyl group having 2 to 8 carbon atoms include vinyl, allyl, 3-butenyl, 5-hexenyl, and 7-octenyl groups.

Specific examples of the aryl group having 6 to 10 carbon atoms include phenyl and naphthyl groups.

Specific examples of the aralkyl group having 7 to 10 carbon atoms include benzyl and phenylethyl groups.

Specific examples of the acyl group having 2 to 8 carbon atoms include an acetyl group and a propionyl group.

Of these, R⁶ is preferably a methyl group or a phenyl group.

R⁷ represents an alkyl group having 1 to 8 carbon atoms or an acyl group having 2 to 8 carbon atoms.

Specific examples of the alkyl group having 1 to 8 carbon atoms include methyl, ethyl, n-propyl, i-propyl, n-butyl, i-butyl, t-butyl, n-pentyl, n-hexyl, n-heptyl, and n-octyl groups.

Specific examples of the acyl group having 2 to 8 carbon atoms include an acetyl group and a propionyl group.

Of these, R⁷ is preferably a methyl group or an ethyl group.

g is an integer of 0 to 3, preferably 1 or 2.

Specific examples of the component (C) include, but are not limited to, dimethyldimethoxysilane, methyltrimethoxysilane, methylphenyldimethoxysilane, dimethyldiethoxysilane, and vinyltrimethoxysilane.

The component (C) may be used alone or as a mixture of two or more compounds.

When the component (C) is used, the content thereof is preferably 0.5 to 50 parts by mass, more preferably 1 to 20 parts by mass per 100 parts by mass of the component (A). When the content of the component (C) is higher than or equal to the lower limit of the above range, the resulting composition is more rapidly cured with water in the air. When the content is lower than or equal to the upper limit of the above range, there is no concern about appearance defects of the cured product and a decrease in hardness.

The room temperature-curable organopolysiloxane composition of the invention may contain, in addition to the components (A) to (C), optional additives, as appropriate, as long as the effects of the invention are not impaired.

Specific examples of the additives include non-reactive silicone oils, reactive silicone oils, tackifiers such as silane coupling agents, non-reactive high-molecular weight resins, fillers, leveling agents, rheology regulators, reactive diluents, non-reactive diluents, surfactants, dispersants, defoamers, dehydrating agents, anti-aging agents, antioxidants, antistatic agents, IR absorbers, UV absorbers, photostabilizers, fluorescent agents, dyes, pigments, flavors, polishing agents, anti-rusting agents, and thixotropic agents.

These additives may be used alone or in combination of two or more thereof.

The room temperature-curable organopolysiloxane composition of the invention is preferably in a solventless form that does not substantially contain a solvent, but can also be used with a solvent added in view of the use thereof and usability. Herein, "substantially" means that the amount of solvent contained in the composition is 1% by mass or less, in particular, 0.1% by mass or less. In such a range, a solvent removal step is not necessary in the formation of a cured coating, and deterioration of a working environment and corrosion and deterioration of electric/electronic parts and circuit boards on which such parts are mounted due to volatilization of a solvent are not caused.

Specific examples of the solvent that can be used include solvents similar to the reaction solvents used in the production of the organopolysiloxane serving as the component (A). Note that the solvent also includes a solvent that is not a component intentionally added to the composition, for example, a reaction solvent that could not be completely removed by distillation under reduced pressure.

The room temperature-curable organopolysiloxane composition of the invention is obtained by mixing the component (A), the component (B), and other components such as the component (C) blended as needed and optional additives in a state where moisture is blocked.

The room temperature-curable organopolysiloxane composition of the invention preferably has a kinematic viscosity of 50 to 1,000 mm²/s, more preferably 100 to 500 mm²/s at 25°C. In such a range, the composition has a good coating property and can be applied by a usual coating method as it is without being diluted with a solvent.

A coating film of the room temperature-curable organopolysiloxane composition of the invention is rapidly cured at room temperature by coming in contact with water in the air to form a coating. The hardness of the cured coating is preferably 90 or more in terms of Type A hardness according to JIS K6249.

The room temperature-curable organopolysiloxane composition of the invention can be used as a so-called one-pack type room temperature-curable composition that is stored as it is in an airtight container and cured only by exposure to moisture in the air at the time of use.

Alternatively, the room temperature-curable organopolysiloxane composition can be used as a so-called multi-pack type room temperature-curable composition in which, for example, the component (A) and the component (C), and the component (B) are stored in two or three separate containers and are then mixed at the time of use. The order of mixing of the components is not particularly limited.

### EXAMPLES

The invention will be more specifically described below by way of Examples and Comparative Examples. The invention is not limited to these Examples.

In Examples, the kinematic viscosity was measured at 25°C with a Cannon-Fenske viscometer by the method described in JIS Z 8803:2011.

The molecular weight was determined as a weight-average molecular weight versus polystyrene standards by measurement with a gel permeation chromatograph (GPC) manufactured by Tosoh Corporation using toluene as a solvent and RI as a detector.

The structural unit ratio of an organopolysiloxane was calculated using a 300 MHz-NMR apparatus manufactured by JEOL Ltd. from the integrated values of detection spectra in ¹H-NMR and ²⁹Si-NMR.

The content of vinyl groups (mol/100 g, hereinafter described as a vinyl value) was quantitatively determined by causing a Hanus solution to act on each product, subsequently causing the resulting product to react with an aqueous solution of potassium iodide, and titrating produced iodine with sodium thiosulfate.

### [1] Production of organopolysiloxane

### [Synthesis Example 1]

To a 500 mL separable flask equipped with a stirrer, a reflux condenser, a dropping funnel, and a thermometer, 185 g (1.54 mol) of methyltrimethoxysilane, 40 g (0.27 mol) of vinylmethyldimethoxysilane, and 0.07 g of maleic anhydride were added, 34.7 g of ion-exchange water was added dropwise under stirring at 15°C, reaction was performed at 70°C for three hours, 6 g of a cation exchange resin (Lewatit K2629, manufactured by Lanxess) was then added, and reaction was further performed at 70°C for three hours. The resulting reaction liquid was distilled off at ordinary pressure, and after no more distillate was produced, heating was performed at 105°C for three hours. Lastly, a distillate was removed by distillation under reduced pressure (90°C, 1.3 kPa) to obtain an organopolysiloxane (A-0) (yield: 145 g). The obtained organopolysiloxane (A-0) was a colorless transparent liquid and had a kinematic viscosity of 66 mm²/s, a Mw of 3,100, and a vinyl value of 0.15 mol/100 g. The structural unit ratio in formula (1) was a = 0, b = 0, c = 0, d = 0.40, e = 0.58, and f = 0.02.

### [Example 1-1]

To a 3 L separable flask equipped with a stirrer, a reflux condenser, a dropping funnel, and a thermometer, 750 g of the organopolysiloxane (A-0) obtained in Synthesis Example 1, 325 g of an organohydrogenpolysiloxane represented by formula (3) below, and 310 g of an organohydrogenpolysiloxane represented by formula (4) below were added and mixed. At that time, the reaction molar ratio of vinyl groups and Si-H groups was 4:1. Platinum(0)-1,3-divinyltetramethyldisiloxane complex was added under stirring at 80°C in an amount of 0.0004 mol per 1 mole of Si-H groups, and reaction was performed at 80°C for three hours. Subsequently, a distillate was removed by distillation under reduced pressure (90°C, 1.3 kPa) to obtain an organopolysiloxane (A-1) (yield: 1,350 g). The obtained organopolysiloxane (A-1) was a colorless transparent liquid, had a kinematic viscosity of 300 mm²/s, a Mw of 16,000, and had a structural unit ratio in formula (1) of a = 0.01, b = 0.01, c = 0, d = 0.43, e = 0.53, and f = 0.02.

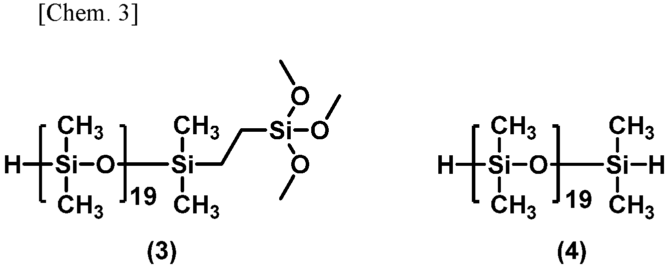

### [Example 1-2]

To a 3 L separable flask equipped with a stirrer, a reflux condenser, a dropping funnel, and a thermometer, 750 g of the organopolysiloxane (A-0) obtained in Synthesis Example 1, 320 g of an organohydrogenpolysiloxane represented by formula (5) below, and 310 g of the organohydrogenpolysiloxane represented by formula (4) above were added and mixed. At that time, the reaction molar ratio of vinyl groups and Si-H groups was 4:1. Platinum(0)-1,3-divinyltetramethyldisiloxane complex was added under stirring at 80°C in an amount of 0.0004 mol per 1 mole of Si-H groups, and reaction was performed at 80°C for three hours. Subsequently, a distillate was removed by distillation under reduced pressure (90°C, 1.3 kPa) to obtain an organopolysiloxane (A-2) (yield: 1,300 g). The obtained organopolysiloxane (A-2) was a colorless transparent liquid, had a kinematic viscosity of 320 mm²/s, a Mw of 17,000, and had a structural unit ratio in formula (1) of a = 0.01, b = 0.01, c = 0, d = 0.43, e = 0.53, and f = 0.02.

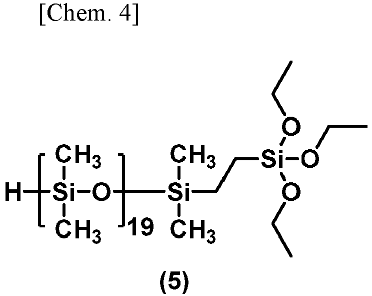

### [Example 1-3]

To a 3 L separable flask equipped with a stirrer, a reflux condenser, a dropping funnel, and a thermometer, 750 g of the organopolysiloxane (A-0) obtained in Synthesis Example 1, 150 g of an organohydrogenpolysiloxane represented by formula (6) below, and 120 g of an organohydrogenpolysiloxane represented by formula (7) below were added and mixed. At that time, the reaction molar ratio of vinyl groups and Si-H groups was 2:1. Platinum(0)-1,3-divinyltetramethyldisiloxane complex was added under stirring at 80°C in an amount of 0.0004 mol per 1 mole of Si-H groups, and reaction was performed at 80°C for three hours. Subsequently, a distillate was removed by distillation under reduced pressure (90°C, 1.3 kPa) to obtain an organopolysiloxane (A-3) (yield: 950 g). The obtained organopolysiloxane (A-3) was a colorless transparent liquid, had a kinematic viscosity of 320 mm²/s, a Mw of 17,000, and had a structural unit ratio in formula (1) of a = 0.02, b = 0.02, c = 0, d = 0.43, e = 0.52, and f = 0.01.

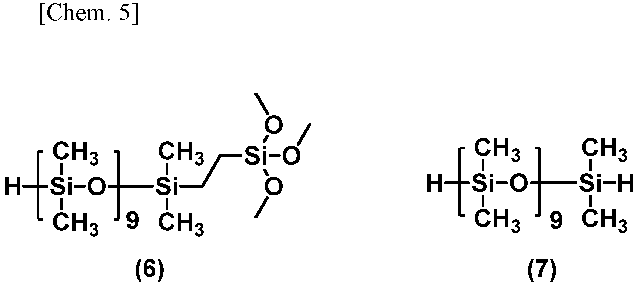

### [Comparative Example 1-1]

To a 3 L separable flask equipped with a stirrer, a reflux condenser, a dropping funnel, and a thermometer, 750 g of the organopolysiloxane (A-0) obtained in Synthesis Example 1 and 620 g of the organohydrogenpolysiloxane represented by formula (4) above were added and mixed. At that time, the reaction molar ratio of vinyl groups and Si-H groups was 4:1. Platinum(0)-1,3-divinyltetramethyldisiloxane complex was added under stirring at 80°C in an amount of 0.0004 mol per 1 mole of Si-H groups, and reaction was performed at 80°C for three hours. Subsequently, a distillate was removed by distillation under reduced pressure (90°C, 1.3 kPa) to obtain an organopolysiloxane (A-4) (yield: 1,350 g). The obtained organopolysiloxane (A-4) was a colorless transparent liquid, had a kinematic viscosity of 420 mm²/s, a Mw of 19,000, and had a structural unit ratio in formula (1) of a = 0, b = 0.02, c = 0, d = 0.43, e = 0.53, and f = 0.02.

### [Comparative Example 1-2]

To a 3 L separable flask equipped with a stirrer, a reflux condenser, a dropping funnel, and a thermometer, 750 g of the organopolysiloxane (A-0) obtained in Synthesis Example 1 and 240 g of the organohydrogenpolysiloxane represented by formula (7) above were added and mixed. At that time, the reaction molar ratio of vinyl groups and Si-H groups was 2:1. Platinum(0)-1,3-divinyltetramethyldisiloxane complex was added under stirring at 80°C in an amount of 0.0004 mol per 1 mole of Si-H groups, and reaction was performed at 80°C for three hours. Subsequently, a distillate was removed by distillation under reduced pressure (90°C, 1.3 kPa) to obtain an organopolysiloxane (A-5) (yield: 1,000 g). The obtained organopolysiloxane (A-5) was a colorless transparent liquid, had a kinematic viscosity of 450 mm²/s, a Mw of 20,000, and had a structural unit ratio in formula (1) of a = 0, b = 0.04, c = 0, d = 0.43, e = 0.52, and f = 0.01.

### [2] Production of room temperature-curable organopolysiloxane composition

### [Examples 2-1 to 2-6 and Comparative Examples 2-1 to 2-3]

Room temperature-curable organopolysiloxane compositions (i) to (ix) were produced by mixing components below to achieve compositions shown in Table 1.

### Component (A)

| | |
|---|---|
| (A-1): | Organopolysiloxane obtained in Example 1-1 |
| (A-2): | Organopolysiloxane obtained in Example 1-2 |
| (A-3): | Organopolysiloxane obtained in Example 1-3 |
| (A-4): | Organopolysiloxane obtained in Comparative Example 1-1 |
| (A-5): | Organopolysiloxane obtained in Comparative Example 1-2 |

### Component (B)

| | |
|---|---|
| D-20: | Titanium catalyst (titanium chelate compound) manufactured by Shin-Etsu Chemical Co., Ltd. |
| ORGATIX TC-750: | Titanium catalyst (titanium chelate compound) manufactured by Matsumoto Fine Chemical Co., Ltd. |

### Component (C)

| | |
|---|---|
| KBM-22: | Dimethyldimethoxysilane manufactured by Shin-Etsu Chemical Co., Ltd. |
| KBM-103: | Phenyltrimethoxysilane manufactured by Shin-Etsu Chemical Co., Ltd. |

For each of the obtained room temperature-curable organopolysiloxane compositions, stability and a tack-free time were evaluated by methods described below. The results are also shown in Table 1.

### (1) Stability

The obtained composition was hermetically sealed and stored in a bottle at 23°C and 50%RH. A composition with no change in appearance after 14 days was rated acceptable "○", and a composition subjected to an increase in viscosity or gelation after 14 days was rated unacceptable "×".

### (2) Tack-free time

The tack-free time was measured at 23°C and 50%RH in accordance with JIS K6249. The obtained composition was placed flat on an aluminum petri dish such that bubbles did not enter (thickness of sample: 3 mm), and the surface was then lightly touched with a fingertip that had been cleaned with ethanol. When the time required for the sample to stop adhering to the fingertip was 10 minutes or less, the sample was rated acceptable "○". When the time was more than 10 minutes, the sample was rated unacceptable "×".

**[Table 1]**

| | | Example | | | | | | Comparative Example | | |
|---|---|---|---|---|---|---|---|---|---|---|
| | | 2-1 | 2-2 | 2-3 | 2-4 | 2-5 | 2-6 | 2-1 | 2-2 | 2-3 |
| Curable composition | | (i) | (ii) | (iii) | (iv) | (v) | (vi) | (vii) | (viii) | (ix) |
| | (A-1) | 100 | 100 | | | 100 | 100 | | | |
| | (A-2) | | | 100 | | | | | | |
| | (A-3) | | | | 100 | | | | | |
| | (A-4) | | | | | | | 100 | | 100 |
| Composition (pbw) | (A-5) | | | | | | | | 100 | |
| | D-20 | 1 | | 1 | | 1 | 15 | 1 | 1 | 30 |
| | TC-750 | | 1 | | 0.1 | | | | | |
| | KBM-22 | | 50 | | | 0.5 | 50 | | | |
| | KBM-103 | | | 1 | 5 | | | | | 1 |
| Stability | | ○ | ○ | ○ | ○ | ○ | ○ | ○ | ○ | × |
| Tack-free time | | ○ | ○ | ○ | ○ | ○ | ○ | × | × | ○ |

### [3] Production and evaluation of cured product

### [Examples 3-1 to 3-6 and Comparative Examples 3-1 to 3-3]

The curable compositions (i) to (ix) obtained in Examples 2-1 to 2-6 and Comparative Examples 2-1 to 2-3 were each placed flat on an aluminum petri dish such that bubbles did not enter, and left to stand at 23°C and 50%RH for seven days to obtain sheet-like cured products. The coating film appearance and the hardness of the obtained cured products were evaluated. The results are shown in Table 2.

### (3) Coating film appearance

In visual observation, a sample that had a uniform coating film surface, was free of irregularities due to aggregates or waving on the film surface due to curing shrinkage, and did not become cloudy was rated acceptable "○", and a sample that had a non-uniform coating film surface, was whitened, and had irregularities due to aggregates or waving on the film surface due to curing shrinkage was rated unacceptable "×".

### (4) Hardness

The hardness was measured as described below in accordance with JIS K6249. The organopolysiloxane composition was formed into sheets each having a thickness of 2 mm and then cured by being left to stand at 23°C and 50%RH for seven days. Subsequently, the resulting three cured sheets were stacked to have a thickness of 6 mm, and the hardness was then measured with a durometer (Type A).

**[Table 2]**

| | Example | | | | | | Comparative Example | | |
|---|---|---|---|---|---|---|---|---|---|
| | 3-1 | 3-2 | 3-3 | 3-4 | 3-5 | 3-6 | 3-1 | 3-2 | 3-3 |
| Curable composition | (i) | (ii) | (iii) | (iv) | (v) | (vi) | (vii) | (viii) | (ix) |
| Appearance | ○ | ○ | ○ | ○ | ○ | ○ | ○ | ○ | ○ |
| Hardness (Type A) | 90 | 92 | 92 | 90 | 90 | 90 | 85 | 90 | 92 |

As shown in Tables 1 and 2, it is found that the curable compositions obtained in Examples 1-1 to 1-6 have a short tack-free time and excellent curability, and there is no problem with stability. It is also found that the cured products of these compositions are also excellent in appearance and hardness.

In contrast, it is found that the compositions of Comparative Examples 1-1 and 1-2 have a long tack-free time and insufficient curability, and that in the case of using the composition of Comparative Example 1-3 in which the condensation catalyst was blended in an excessive amount, stability was poor, although curability and the hardness of the resulting cured product are sufficient.

## Claims

1. An organopolysiloxane having a structural unit ratio represented by formula (1) below: 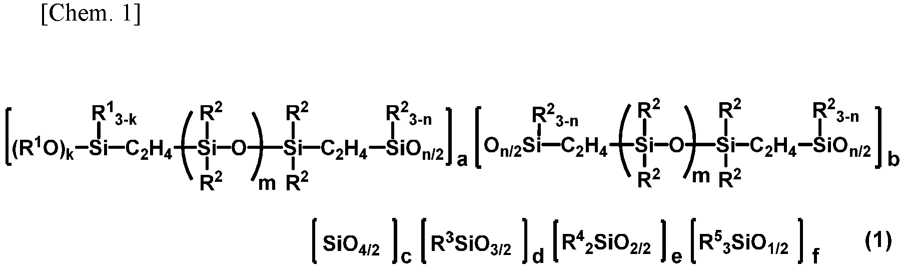 wherein R¹ and R² each independently represent an unsubstituted or substituted alkyl group having 1 to 12 carbon atoms or an unsubstituted or substituted aryl group having 6 to 10 carbon atoms; k represents an integer of 1 to 3; m represents a number of 5 to 100; n represents 2 or 3; R³, R⁴, and R⁵ each independently represent an unsubstituted or substituted alkyl group having 1 to 12 carbon atoms, an unsubstituted or substituted alkenyl group having 2 to 8 carbon atoms, an unsubstituted or substituted aryl group having 6 to 10 carbon atoms, an unsubstituted or substituted aralkyl group having 7 to 10 carbon atoms, an unsubstituted or substituted alkoxy group having 1 to 4 carbon atoms, or a hydroxy group; and a, b, c, d, e, and f each represent a number satisfying a > 0, b > 0, c ≥ 0, d > 0, e > 0, f ≥ 0, and a+b+c+d+e+f = 1.

2. The organopolysiloxane according to claim 1, wherein R¹ and R² each independently represent a methyl group or an ethyl group.

3. The organopolysiloxane according to claim 1, wherein a kinematic viscosity at 25°C is 100 to 2,000 mm²/s.

4. The organopolysiloxane according to claim 1, wherein a weight-average molecular weight (Mw) determined by gel permeation chromatography versus polystyrene standards is 1,000 to 50,000.

5. A room temperature-curable organopolysiloxane composition comprising:
(A) the organopolysiloxane according to claim 1: 100 parts by mass; and
(B) a catalyst for condensation reaction: 0.1 to 15 parts by mass.

6. The room temperature-curable organopolysiloxane composition according to claim 5, wherein the component (B) includes an organotitanium compound.

7. The room temperature-curable organopolysiloxane composition according to claim 5, comprising (C) a silane compound represented by general formula (2) below in an amount of 0.5 to 50 parts by mass per 100 parts by mass of the component (A),
R⁶_{g}Si(OR⁷)_{4-g} (2)
wherein each R⁶ independently represents an alkyl group having 1 to 8 carbon atoms, an alkenyl group having 2 to 8 carbon atoms, an aryl group having 6 to 10 carbon atoms, an aralkyl group having 7 to 10 carbon atoms, or an acyl group having 2 to 8 carbon atoms; R⁷ represents an alkyl group having 1 to 8 carbon atoms or an acyl group having 2 to 8 carbon atoms; and g represents an integer of 0 to 3.

8. The room temperature-curable organopolysiloxane composition according to claim 5, wherein a solvent content is 1% by mass or less based on a total mass of the composition.

9. An electric or electronic part sealed, fixed, or bonded with a cured product of the room temperature-curable organopolysiloxane composition according to any one of claims 5 to 8.

10. A conformal coating comprising the room temperature-curable organopolysiloxane composition according to any one of claims 5 to 8.
